# EUROPEAN PATENT SPECIFICATION

(11) **EP 4 345 942 B1**
(45) Date of publication and mention of the grant of the patent: **20.08.2025**
(21) Application number: 23199907.9
(22) Date of filing: 26.09.2023
(51) Int. Cl.: H01M 4/133, H01M 4/134, H01M 4/1393, H01M 4/1395, H01M 4/36, H01M 4/38, H01M 4/583, H01M 4/66, H01M 4/04, H01M 4/587, H01M 4/62, H01M 10/052, H01M 4/02

(54) **GRAPHITIZED POROUS SILICON-CARBON ANODE MATERIAL, PREPARATION METHOD THEREOF AND LITHIUM ION BATTERY**
GRAPHITIERTES PORÖSES SILICIUM-KOHLENSTOFF-ANODENMATERIAL, HERSTELLUNGSVERFAHREN DAFÜR UND LITHIUM-IONEN-BATTERIE
MATÉRIAU D'ANODE AU SILICIUM-CARBONE POREUX GRAPHITISÉ, SON PROCÉDÉ DE PRÉPARATION ET BATTERIE AU LITHIUM-ION

(30) Priority: 30.09.2022 CN 202211212200
(43) Date of publication of application: 03.04.2024
(73) Proprietor: Beijing WeLion New Energy Technology Co., Ltd, Beijing 102402 (CN)
(72) Inventor: WANG, Shengbin, Beijing, 102402 (CN); ZHANG, Zhen, Beijing, 102402 (CN); YANG, Qi, Beijing, 102402 (CN); YU, Huigen, Beijing, 102402 (CN)
(74) Representative: reuteler & cie SA

(56) References cited:
- CN-A- 106 025 219
- CN-A- 112 786 854
- CN-A- 115 642 234
- US-A1- 2020 194 785

## Description

### FIELD

The present disclosure relates to the technical field of lithium ion battery negative electrode materials, in particular to a graphitized porous silicon-carbon negative electrode material, a preparation method thereof and a lithium ion battery.

### BACKGROUND

The commercially used lithium ion batteries existing mainly adopt the pure graphite, or graphite/silicon-carbon mixture doped with a small amount of silicon as the negative electrode material, however, given that the theoretical specific capacity of the graphite is only 372mAh/g, the specific capacity of the graphite/silicon-carbon mixture is generally below 500mAh/g, the further improvement of the specific energy of the lithium-ion batteries is limited, and it cannot meet the requirements imposed by the development of new energy industries such as existing electric automobiles. The silicon negative electrode based on alloying reactions has a theoretical lithium storage capacity of up to 4,200mAh/g, which is the ideal choice for the next generation of lithium-ion battery negative electrode material. However, the silicon has a large volume expansion (>300%) during the alloying reaction with lithium, which leads to pulverization and deactivation of the particles, so that the cycling stability of the silicon negative electrode is poor, especially the silicon-carbon negative electrode with a high specific capacity.

Although the porous structure can accommodate the expansion of silicon during the lithium deintercalation process, the particle conductivity is poor due to the absence of conductive particles between the pores, thereby causing the performance decline of the multiplying power. In addition, the pore structure is also prone to collapse and crack, so that the silicon is in direct contact with the electrolyte, and the cycle performance of the battery is degraded.

CN109638229A discloses a silicon-carbon composite negative electrode material, a preparation method thereof, and a lithium-ion battery, wherein the silicon-carbon composite negative electrode material is a material with a core-shell structure, wherein a core part comprises nano-silicon, amorphous carbon, graphene and carbon nanotubes, the surface of the nano-silicon is coated with the amorphous carbon, the nano-silicon coated with the amorphous carbon is distributed on the surfaces of the graphene and the carbon nanotubes, the carbon nanotubes form a three-dimensional cross-linked network, and the graphene is uniformly distributed in the three-dimensional cross-linked network, and a shell part is a carbon layer. However, the graphene of CN109638229A is not the in-situ generated graphene, but the externally added graphene. The externally added structure is only in physical contact with other raw materials in the particles, the association is not sufficiently close, such that the structure merely plays a common conductive role.

US2020/0194785A1 discloses a negative active material includes: an active material core; and a composite coating layer located on a surface of the active material core, wherein the composite coating layer includes a lithium-containing oxide having an orthorhombic crystal structure, and a first carbonaceous material, the lithium-containing oxide.

CN112786854A provides a core-shell type silicon-carbon composite material which comprises silicon-carbon composite particles, the silicon-carbon composite particles comprise graphite and silicon nanoparticles adsorbed on the surface of the graphite, and the core-shell type silicon-carbon composite material further comprises a first carbon coating layer and at least one second carbon coating layer which coat the surfaces of the silicon nanoparticles, after the first carbon coating layer and the second carbon coating layer are mixed with the silicon nanoparticles by adopting a mixed carbon source treated by a surface modifier, the polarity of the first carbon coating layer and the second carbon coating layer is changed by the surface modifier, and the first carbon coating layer and the second carbon coating layer repel each other; and the first carbon coating layer has adsorbability on the silicon nanoparticles. The core-shell type silicon-carbon composite material provided by the invention has relatively low volume expansion rate and relatively good cycle performance. The invention also provides a preparation method of the core-shell type silicon-carbon composite material and application of the core-shell type silicon-carbon composite material.

CN106025219A discloses a spherical silicon-oxygen-carbon negative electrode composite material, which is of a three-layer structure comprising an inner layer, an intermediate layer and an outer layer, wherein the inner layer is an SiOx/graphite substrate; the intermediate layer is an amorphous carbon coating layer; the outer layer is a carbon nanotube coating layer; the mass of the inner layer SiOx/graphite substrate accounts for 80%-90% of total mass of the spherical silicon-oxygen-carbon negative electrode composite material; the mass of the intermediate layer amorphous carbon accounts for 5%-10% of total mass of the spherical silicon-oxygen-carbon negative electrode composite material; and the outer layer carbon nanotube accounts for 5%-10% of total mass of the spherical silicon-oxygen-carbon negative electrode composite material. The grain diameter of the adopted SiOx substrate is smaller than 5 microns; the grain diameter is relatively small; intercalation and deintercalation of active substances are facilitated; higher specific capacity can be obtained; meanwhile, a dispersing agent is added when an SiOx sample is ground; and condition that the SiOx with a relatively small grain diameter is agglomerated in quantity to affect the performance is prevented.

Therefore, it has an important significance to research and develop a graphitized porous silicon-carbon negative electrode material.

### SUMMARY

The present disclosure aims to overcome the defects of poor cycle stability of a silicon-based negative electrode and degraded performance of the multiplying power in the existing and provides a graphitized porous silicon-carbon negative electrode material, a preparation method thereof and a lithium-ion battery, wherein the graphitized silicon-carbon negative electrode material can solve the problems that a porous structure is prone to crack and the multiplying power is reduced.

In order to achieve the above purpose, the first aspect of the present disclosure provides a graphitized porous silicon-carbon negative electrode material comprising a core and a carbon coating layer coated on an outer surface of the core, wherein the core sequentially comprises an inner layer and a shallow surface layer from inside to outside, the graphitized porous silicon-carbon negative electrode material is internally provided with pores in gradient distribution, and the porosity is gradiently decreased from inside to outside along the inner layer, the shallow surface layer and the carbon coating layer; and the core comprises a silicon-carbon composite comprising nano-silicon particles, a conductive agent and a graphitized carbon material.

In a second aspect, the present disclosure provides a method for preparing the aforementioned graphitized porous silicon-carbon negative electrode material comprising:
(1) contacting nano-silicon particles, a carbon source, a dispersant, a conductive agent with water to prepare a slurry; subjecting the slurry to a spray granulation and a first calcination treatment to obtain a silicon-carbon composite core 1;
(2) subjecting a mixture consisting of the silicon-carbon composite core 1, a solvent and a high-temperature asphalt 1 to a heating treatment, and subjecting the obtained silicon-carbon composite containing asphalt on the shallow surface layer to a second calcination treatment, to obtain a silicon-carbon composite core 2 having a high inner layer porosity and a low shallow surface layer porosity;
   wherein a metal catalyst salt is added in the process of preparing the slurry and/or performing the heating treatment in step (1) and/or step (2);
(3) subjecting the silicon-carbon composite core 2 and the high-temperature asphalt 2 to a mechanical fusion or a CVD coating, and performing a high-temperature carbonization treatment, in order to prepare the silicon-carbon negative electrode material having a dense carbon coating layer on the outer part, a high inner layer porosity, and a low shallow surface layer porosity.

In a third aspect, the present disclosure provides a lithium ion battery comprising the aforementioned graphitized porous silicon-carbon negative electrode material.

Through the aforesaid technical scheme, the present disclosure has the following favorable effects:
(1) the multiplying power performance of the lithium-ion battery is improved by using a metal catalyst salt for catalyzing a carbon resource to reach a high graphitization, and growing carbon nanotubes or grapheme, enhancing the connection between the one-dimensional carbon materials, improving connectivity and uniformity between materials in the particles, preventing cracking of the materials from the inside, and the graphitized carbon has an increased conductivity than the amorphous carbon;
(2) the stable inner layer and shallow surface layer are formed through the design of gradient pores, and in combination with the dense carbon coating layer, thereby solving the expansion problem of the silicon-carbon negative electrode;
(3) by adding a one-dimensional carbon material into the core, the problems such as insufficient conductivity of the silicon negative electrode are solved, in addition, the carbon material with a high aspect ratio can perform the functions of enwinding and stabilizing the structure;
(4) by arranging that the gradient porosity is gradually reduced, the stable inner layer and shallow surface layer are formed, and the generation of side reaction and outward expansion of silicon are inhibited;
(5) the outermost layer of the silicon-carbon negative electrode material in the present disclosure has a dense carbon coating, so that the specific surface area is reduced, the tap density is increased, the direct contact between the electrolyte and silicon is isolated, a desirable SEI (solid electrolyte interface) film is constructed, the first efficiency (i.e., the first coulombic efficiency) of the material is improved, the capacity retention rate is increased, the tap density of the material is increased, thereby facilitating the material coating;
(6) the preparation process is simple and can be easily industrialized.

### BRIEF DESCRIPTION OF THE DRAWINGS

FIG. 1 is a structural schematic diagram of the graphitized porous silicon-carbon negative electrode material of the present disclosure;
FIG. 2 illustrates an SEM (scanning electron microscope) photograph of the graphitized porous silicon-carbon negative electrode material with pores in a gradient structure prepared in Example 1 of the present disclosure;
FIG. 3 illustrates a curve schematic diagram of the parameters I_{D}, I_{G} and I_{2D} of the graphitized porous silicon-carbon negative electrode material with pores in a gradient structure prepared in Example 1 of the present disclosure.

### DESCRIPTION OF THE REFERENCE SIGNS

1: Inner layer;
2: Shallow surface layer;
3: Carbon coating layer;
4: One-dimensional carbon material;
5: Nano-silicon particles;
6: Irregular internal pores;
7: Graphitized carbon material.

### DETAILED DESCRIPTION

The terminals and any value of the ranges disclosed herein are not limited to the precise ranges or values, such ranges or values shall be comprehended as comprising the values adjacent to the ranges or values. As for numerical ranges, the endpoint values of the various ranges, the endpoint values and the individual point value of the various ranges, and the individual point values may be combined with one another to produce one or more new numerical ranges, which should be deemed have been specifically disclosed herein.

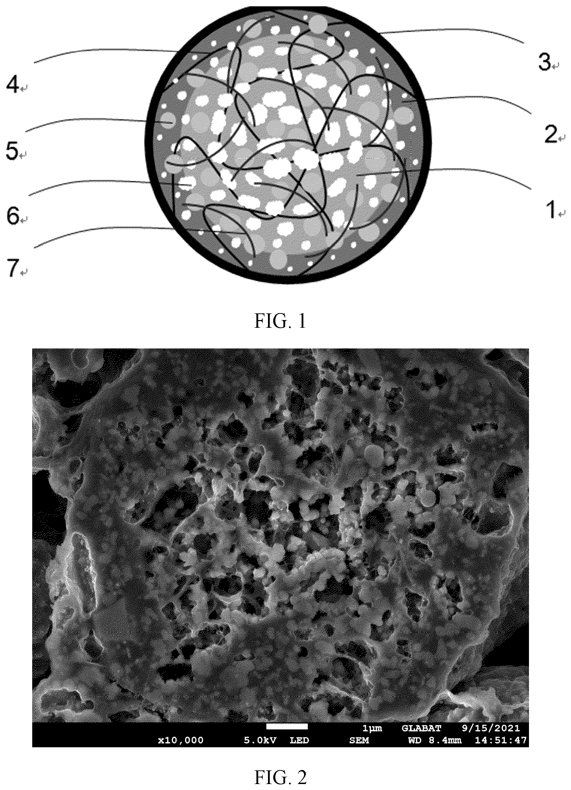

As mentioned above, the first aspect of the present disclosure provides a graphitized porous silicon-carbon negative electrode material, as shown in FIG. 1, the graphitized porous silicon-carbon negative electrode material comprising a core and a carbon coating layer 3 coated on an outer surface of the core, wherein the core sequentially comprises an inner layer 1 and a shallow surface layer 2 from inside to outside, the graphitized porous silicon-carbon negative electrode material is internally provided with pores in gradient distribution, and the porosity is gradiently decreased from inside to outside along the inner layer, the shallow surface layer and the carbon coating layer; and the core comprises a silicon-carbon composite comprising nano-silicon particles 5, a conductive agent and a graphitized carbon material 7.

The present inventors have discovered that a metal catalyst salt is used for catalyzing a carbon source to be highly graphitized, and a carbon nanotube or grapheme is grown; in addition, the one-dimensional carbon material 4 of the present disclosure is dispersed in the whole particle, on one hand, the one-dimensional carbon material 4 can desirably play a conductive role, and compensate the deficient conductivity of the semiconductor silicon; on the other hand, the graphitized carbon material can strengthen the connection between the one-dimensional carbon material 4, and enhance the connectivity and uniformity between materials in the particles, prevent cracking of the materials from the inside, and the graphitized carbon has improved conductivity relative to the amorphous carbon, thereby improving the multiplying power performance.

Further, the present inventors have discovered that the porosity in the porous silicon-carbon negative electrode material in the existing is not reasonably controlled, and the volume expansion cannot be favorably controlled. The pore structure in the silicon-carbon negative electrode material of the present disclosure is different from that in the existing, the porosity is sequentially reduced from inside to outside to form a stable inner layer and shallow surface layer, and in combination with the dense carbon coating layer 3, so that the expansion of silicon is more inclined to expand inwards, thereby achieving a desirable effect of limiting expansion; further, the conductive layer in the existing is disposed between the core and the outermost layer, it cannot desirably perform the conductive function.

Furthermore, during the whole technological process of the existing, sintering and crushing are directly carried out on the materials after the ball-milling process, so that the structure of the materials is not sufficiently ordered and have various particle sizes, and the particles are not smooth enough, some silicon powder may be directly exposed outside after crushing, which is not beneficial to the subsequent coating process; the present disclosure carries out granulation treatment on the slurry, thereby overcoming the defective problems in the existing.

Furthermore, the inventors of the present disclosure found that in the existing, the graphene of CN109638229A is not the in-situ generated graphene, but the externally added grapheme; the externally added structure is only in physical contact with other raw materials in the particles, the association is not sufficiently close, such that the structure merely plays a common conductive role. The present disclosure catalyzes graphitization of the carbon source, which not only has the function of increasing conductivity, but also has the advantage of in-situ generation, namely, the graphitized carbon directly grown from the inside of the particles is more closely connected with other raw materials in the particles, so that the graphitized carbon can play a better role in performing electric conduction and strengthening the connection in the particles.

According to the present disclosure, the whole particle of the graphitized porous silicon-carbon negative electrode material has a graphitization degree within the range from 50% to 90%, preferably within the range from 55% to 70%, more preferably within the range from 57.5% to 66.9%.

According to the present disclosure, the whole particle of the graphitized porous silicon-carbon negative electrode material contains silicon, a one-dimensional carbon material, amorphous carbon, and graphitized carbon; the content of the silicon is within the range from 40wt.% to 80 wt.%, preferably within the range from 40wt.% to 50 wt.%, and the total content of the one-dimensional carbon material, the amorphous carbon, and the graphitized carbon is within the range from 20wt.% to 60 wt.%, preferably within the range from 50wt.% to 60 wt.%, based on the total weight of the whole particle of the graphitized porous silicon-carbon negative electrode material;

According to the present disclosure, an average pressure borne by the graphitized porous silicon-carbon negative electrode material is within the range from 500MPa to 1,500 MPa, preferably within the range from 700MPa to 1,000MPa, and more preferably within the range from 781MPa to 910 MPa.

According to the present disclosure, the graphitized porous silicon-carbon negative electrode material satisfies the following conditions:
I_{D}:I_{G}=0.5-1.5; preferably, I_{D}:I_{G} = 0.87-1.01;
wherein I_{D} denotes the defect degree of the carbon atom crystal lattice, and I_{G} represents the in-plane stretching vibration of sp² hybridization of the carbon atom, namely the graphitization degree; I_{D}: I_{G} denotes the intensity ratio of the two parameters, the larger is the value, it represents the more defects of the carbon atom crystals; the smaller is the value, it represents the higher graphitization degree of the material.
I_{2D}/I_{G} = 0.01-1; preferably, I_{2D}/I_{G} = 0.51-0.66;
wherein I_{2D} represents the characteristic peak intensity of the graphite slice layer, and the appearance of a 2D peak in a Raman spectrum represents the graphitization of the material.

According to the present disclosure, the graphitized porous silicon-carbon negative electrode material has a conductivity within the range from 1×10¹S/m to 1×10⁵S/m, preferably within the range from 1.5×10²S/m to 5×10²S/m, more preferably within the range from 2.1×10²S/m to 4.3×10²S/m.

According to the present disclosure, the nano-silicon particles have a D₅₀ within the range from 30nm to 500nm, preferably within the range from 30nm to 100nm; the nano-silicon particles in the present disclosure are silicon powder.

According to the present disclosure, the conductive agent comprises a metallic material and/or a non-metallic material; preferably, the conductive agent includes a one-dimensional carbon material 4; more preferably, the one-dimensional carbon material 4 is a conductive carbon material; still further preferably, the conductive carbon material comprises at least one selected from the group consisting of single-walled CNTs (single-walled carbon nano tubes), multi-walled CNTs (multi-walled carbon nano tubes), and VGCF (vapor grown carbon fiber).

According to the present disclosure, the one-dimensional carbon material has an aspect ratio of (20-20,000): 1, preferably (100-300): 1.

The conductive agent of the present disclosure is dispersed in the whole particle and can produce a better conductive effect.

According to the present disclosure, the silicon-carbon negative electrode material has pores in gradient distribution therein, and the porosity is gradiently decreased from inside to outside along the inner layer 1, the shallow surface layer 2, and the carbon coating layer 3.

According to the present disclosure, the inner layer 1 has a porosity within the range from 30% to 60%, the shallow surface layer 2 has a porosity within the range from 10% to 30%, the carbon coating layer (carbon coating layer 3) has a porosity less than 20%, preferably within the range from 1% to 10%; preferably, the inner layer 1 has a porosity within the range from 40% to 50%, the shallow surface layer 2 has a porosity within the range from 10% to 15%, the carbon coating layer (carbon coating layer 3) has a porosity within the range from 1% to 6%; more preferably, the inner layer 1 has a porosity within the range from 41.5% to 48.3%, the shallow surface layer 2 has a porosity within the range from 11.9% to 13.9%, the carbon coating layer (carbon coating layer 3) has a porosity within the range from 1.7% to 5.8%. In the present disclosure, by arranging the gradually reduced gradient porosity, the stable inner layer 1 and shallow surface layer 2 are formed, and the generation of side reaction and outward expansion of silicon are inhibited.

According to the present disclosure, the pore size distribution of the internal pores of the inner layer 1 is within the range from 10nm to 1,000nm, the pore size distribution of the internal pores of the shallow surface layer 2 is within the range from 5nm to 30nm, and the pore size distribution of the internal pores of the carbon coating layer (carbon coating layer 3) is greater than 0 and less than or equal to 10nm, preferably within the range from 0.01nm to 10nm, and more preferably within the range from 1nm to 10nm; preferably, the pore size distribution of the internal pores of the inner layer 1 is within the range from 30nm to 60nm, the pore size distribution of the internal pores of the shallow surface layer 2 is within the range from 5nm to 10nm, and the pore size distribution of the internal pores of the carbon coating layer (carbon coating layer 3) is within the range from 1nm to 5nm. In the present disclosure, the stable inner layer 1 and shallow surface layer 2 are formed through the design of gradient pores, and in combination with a dense carbon coating layer 3, thereby solving the expansion problem of the silicon-carbon negative electrode.

According to the present disclosure, the silicon-carbon negative electrode material has a D₅₀ within the range from 5µm to 30µm; a tap density within the range from 0.6g/cm³ to 1.2g/cm³; and a specific surface area within the range from 0.4m²/g to 20 m²/g; preferably, the silicon-carbon negative electrode material has a D₅₀ within the range from 5µm to 15µm; a tap density within the range from 0.8g/cm³ to 1.1g/cm³; and a specific surface area within the range from 0.5m²/g to 10 m²/g; further preferably, the silicon-carbon negative electrode material has a D₅₀ within the range from 5µm to 9µm; a tap density within the range from 0.82g/cm³-1g/cm³; and a specific surface area within the range from 0.5m²/g to 6.3 m²/g; more further preferably, the silicon-carbon negative electrode material has a D₅₀ within the range from 8.1µm-9µm; a tap density within the range from 0.84g/cm³-0.91g/cm³; and a specific surface area within the range from 0.4m²/g-5.3 m²/g.

According to the present disclosure, the particle size of the inner layer 1 is from 20% to 90%, preferably from 20% to 50%, based on the D₅₀ of the silicon-carbon negative electrode material; that is, the silicon-carbon negative electrode material in the present disclosure has a D50 within the range from 5µm to 30µm, and accordingly, the inner layer 1 has a particle size within the range from 1 µm to 27 µm, preferably within the range from 1µm to 15µm, and more preferably within the range from 2.0µm to 5.3µm.

According to the present disclosure, the thickness of the shallow surface layer 2 is within the range from 0.25µm to 12µm; preferably, the thickness of the shallow surface layer 2 is within the range from 2µm to 10µm; more preferably, the thickness of the shallow surface layer 2 within the range of is from 3µm to 5.8µm; still further preferably, the thickness of the shallow surface layer 2 within the range of is from 3.4µm to 5.6µm.

According to the present disclosure, the thickness of the carbon coating layer (carbon coating layer 3) is within the range from 10nm to 1µm; preferably, the thickness of the carbon coating layer (carbon coating layer 3) is within the range from 10nm to 700nm; more preferably, the thickness of the carbon coating layer (carbon coating layer 3) is within the range from 10nm to 600nm; still further preferably, the thickness of the carbon coating layer (carbon coating layer 3) is within the range from 200nm to 500nm.

According to the present disclosure, the coating amount of the carbon coating layer (carbon coating layer 3) is from 1wt.% to 20 wt.%, preferably from 10wt.% to 20 wt.% of the graphitized porous silicon-carbon negative electrode material.

In a second aspect, the present disclosure provides a method for preparing the aforementioned graphitized porous silicon-carbon negative electrode material comprising the following steps:
(1) contacting nano-silicon particles, a carbon source, a dispersant, a conductive agent with water to prepare a slurry; subjecting the slurry to a spray granulation and a first calcination treatment to obtain a silicon-carbon composite core 1;
(2) subjecting a mixture consisting of the silicon-carbon composite core 1, a solvent and a high-temperature asphalt 1 to a heating treatment, and subjecting the obtained silicon-carbon composite containing asphalt on the shallow surface layer to a second calcination treatment, to obtain a silicon-carbon composite core 2 having a high inner layer porosity and a low shallow surface layer porosity;
   wherein a metal catalyst salt is added in the process of preparing the slurry and/or performing the heating treatment in step (1) and/or step (2);
(3) subjecting the silicon-carbon composite core 2 and the high-temperature asphalt 2 to a mechanical fusion or a CVD coating, and performing a high-temperature carbonization treatment, in order to prepare the silicon-carbon negative electrode material having a dense carbon coating layer on the outer part, a high inner layer porosity, and a low shallow surface layer porosity.

According to the present disclosure, the conditions of the first calcination treatment, the second calcination treatment and the high-temperature carbonization treatment are the same or different, and the respective sintering procedure includes a temperature rise rate within the range from 1°C/min to 5°C /min, a final heating temperature within the range from 600 °C to 1,200 °C, and a heat preservation time within the range from 1hours to 6 hours; preferably a temperature rise rate within the range romf 1°C/min to 5 °C/min, a final heating temperature within the range from 900 °C to 1,100 °C , and a heat preservation time within the range from 3hours to 5 hours.

According to the present disclosure, the sintering is performed under an inert atmosphere; preferably, the inert atmosphere comprises nitrogen gas or argon gas.

According to the present disclosure, the metal catalyst salt comprises one or more selected from the group consisting of iron salt, cobalt salt, nickel salt, and magnesium salt; preferably, the metal catalyst salt comprises one or more selected from the group consisting of nickel acetate, nickel nitrate, nickel sulfate, ferric nitrate, ferric chloride, ferric sulfate, magnesium nitrate, magnesium chloride, magnesium sulfate, cobalt nitrate, and cobalt chloride.

According to the present disclosure, the weight ratio of the used amounts of the nano-silicon particles, the carbon source, the conductive agent, the metal catalyst salt, and the dispersant is (40-80): (5-50): (5-40): (5-60): (5-20); preferably (60-70): (5-20): (5-40): (5-30): (5-10).

According to the present disclosure, the carbon source is one or more selected from the group consisting of low-temperature asphalt, medium-temperature asphalt, high-temperature asphalt, water-soluble asphalt, phenolic resin, CMC, glucose and sucrose.

According to the present disclosure, the dispersant comprises one or more selected from the group consisting of PVP (polyvinylpyrrolidone), CTAB (cetyltrimethylammonium bromide), polyethylene glycol, and SDS (sodium dodecyl sulphate).

According to the present disclosure, the slurry in step (1) has a solid content within the range from 1wt.% to 40 wt.%, preferably 2wt.% to 30 wt.%.

According to the present disclosure, the conditions of the heating treatment in step (2) include: a temperature within the range from 600 °C to 1,200 °C, preferably within the range from 900 °C to 1,100 °C; in the present disclosure, under the heating condition, the high-temperature asphalt is completely dissolved, the solvent is slowly evaporated, and the dissolved high-temperature asphalt is infiltrated into the pores of the silicon-carbon composite core 1 through the channel established by the solvent, wherein the infiltration amount of the asphalt is within the range from 5wt.% to 30 wt.%.

According to the present disclosure, the solvent in step (2) comprises one or more selected from the group consisting of tetrahydrofuran, NMP, toluene, and xylene, preferably tetrahydrofuran.

According to the present disclosure, the coating in step (3) is performed by using at least one of a particle fusion machine, a VCJ machine, and a CVD.

According to the present disclosure, the used amount of the high-temperature asphalt 1 is from 5wt.% to 30 wt.%, preferably from 20wt.% to 30 wt.%, based on the total weight of the silicon-carbon composite core 1.

According to the present disclosure, the used amount of the high-temperature asphalt 2 in step (3) is from 1wt.% to 20 wt.%, preferably from 10wt.% to 20 wt.%, based on the total weight of the silicon-carbon composite core 2.

According to the present disclosure, the high-temperature asphalt 1 and the high-temperature asphalt 2 are the same or different, and are respectively one or more selected from the group consisting of high-temperature asphalt with the softening points of 200 °C, 250 °C, 280 °C, and 300 °C.

The inventors of the present disclosure have discovered that the asphalt in the existing is uniformly distributed in the particles by spraying, thereby forming a structure having uniform voids inside and a carbon coating layer on the outside, which is a simple dual structure. However, the asphalt of the present disclosure is distributed on the shallow surface layer of the core under a special process, and after carbonization, the structure with a high core porosity and a low shallow surface layer porosity is formed. In addition, the outermost part of the negative electrode material in the present disclosure is further provided with a more dense carbon coating layer 3 having extremely low porosity, thus the negative electrode material in the present disclosure has a triple structure, which sequentially comprises the following components: an inner layer 1 with a high porosity, a shallow surface layer 2 with a low porosity, and a carbon coating layer 3 with extremely low porosity. Due to the structures with gradually decreased porosity from inside to outside, the expansion of silicon can be effectively inhibited, thereby optimizing the cycle performance.

In a third aspect, the present disclosure provides a lithium ion battery comprising the aforementioned graphitized porous silicon-carbon negative electrode material provided with pores in a gradient structure.

In the present disclosure, the silicon-carbon negative electrode material with pores in a gradient structure, a conductive agent, a binder, and deionized water are mixed to form a slurry, which is subjected to coating, drying and cutting, thus a pole piece is obtained; a lithium sheet and a conventional electrolyte are assembled into a button half-cell; wherein the weight ratio of the used amounts of the silicon-carbon negative electrode material with pores in a gradient structure, the conductive agent, and the binder is (70-95): (0.1-10): (2-25).

The present disclosure will be described in detail below with reference to examples.

In the following Examples and Comparative Examples:

I_{D}, I_{G} and I_{2D} were parameters obtained by Raman testing.

The hardness parameters were parameters obtained through the testing conducted with a micro compression tester.

The conductivity was the parameter measured by using a conductivity tester.

The porosity was the data derived from the computerized tomography (CT) scanning technique and the algorithm statistics.

The tap density, the specific surface area, and the particle size were the data measured by a tap density instrument, a specific surface area analyzer and a laser particle size analyzer respectively.

The thickness of an inner layer, a shallow surface layer, and a carbon coating layer were the data measured by CP + SEM (ion cutting + scanning electron microscope) and analyzed by the statistical method.

### Example 1

The example served to illustrate the silicon-carbon negative electrode material with pores in a gradient structure prepared in the present disclosure.
(1) 120g of silicon powder with a D₅₀ of 100nm, 40g of carbon source high-temperature asphalt, 40g of conductive agent CNTs (CNTs with an aspect ratio of 200: 1), 40g of metal catalyst salt nickel acetate and 20g of dispersant PVP were sequentially dispersed in deionized water to obtain a slurry, and the solid content of the slurry was adjusted to 20 wt.%. The dispersed slurry was subjected to spray granulation to obtain a spray-granulated core; the spray-granulated core was subjected to a sintering procedure in an inert atmosphere, wherein the sintering procedure was as follows: heating from room temperature to 350 °C at a temperature rise rate of 5 °C/min and performing the heat preservation for 2 hours, then heating from 350 °C to 900 °C at a temperature rise rate of 2 °C/min and performing the heat preservation for 3 hours, and finally cooling to room temperature to obtain the sintered silicon-carbon composite core 1;
(2) the silicon-carbon composite core 1 was subsequently dispersed in tetrahydrofuran, 10% of high-temperature asphalt (with the softening point of 250 °C) was further added, the mixture was heated at 70°C after the high-temperature asphalt was completely dissolved, so that the tetrahydrofura was slowly evaporated; the dissolved asphalt was infiltrated into pores of the silicon-carbon composite material under a channel established by tetrahydrofuran, after the tetrahydrofuran was completely evaporated, a silicon-carbon composite containing asphalt on the shallow surface layer was obtained, the silicon-carbon composite was subjected to a sintering procedure in an inert atmosphere, wherein the sintering procedure was as follows: heating from room temperature to 500 °C at a temperature rise rate of 2 °C/min and performing heat preservation for 1 hour, then heating from 500 °C to 1,000 °C at a temperature rise rate of 1 °C /min and performing heat preservation for 3 hours, and finally cooling to room temperature to obtain a silicon-carbon composite core 2 with a high inner layer porosity and a low shallow surface layer porosity;
(3) the silicon-carbon composite core 2 and 10% high-temperature asphalt (with a softening point of 280 °C) were subjected to a mechanical fusion by using a particle fusion machine, and then subjected to a high-temperature carbonization treatment in an inert atmosphere, wherein the sintering procedure was as follows: heating from room temperature to 500 °C at a temperature rise rate of 2°C/min and performing heat preservation for 1 hour, then heating from 500 °C to 1,000 °C at a temperature rise rate of 1°C /min and performing heat preservation for 3 hours, the temperature was reduced to the room temperature, the mixture was then sieved by a 400-mesh sieve, such that the silicon-carbon composite porous material with pores in a gradient structure having a dense carbon coating layer on the outside, a high inner layer porosity, and a low shallow surface layer porosity was prepared; the results were shown in Table 1.

The finished product silicon-carbon negative electrode material with pores in a gradient structure was coated with a film and assembled into the CR2032-button cell, wherein the silicon-carbon negative electrode material with pores in a gradient structure, a conductive agent, a binder, and deionized water are mixed according to the weight ratio of 90: 3: 7: 200 to form a slurry, which was subjected to coating, drying and cutting to obtain a pole piece; the lithium sheet and the conventional electrolyte were assembled into a button half-cell, and subjected to the charging and discharging test. The charging and discharging cycles were performed with the 1C multiplying power. The battery charging and discharging test was carried out in a multi-channel battery, and the test voltage range of the silicon-carbon negative electrode material was 0.005V-0.8V; the results were shown in Table 2.

In addition, FIG. 1 was a structural schematic diagram of the silicon-carbon negative electrode material with pores in a gradient structure of the present disclosure; as shown by FIG. 1, the silicon-carbon negative electrode material comprised an inner layer 1, a shallow surface layer 2 and a carbon coating layer 3; in addition, the inner layer 1 had irregular internal pores 6, the porosity was decreased from inside to outside sequentially; the core further included a one-dimensional carbon material 4, nano-silicon particles 5 and a graphitized carbon material 7, wherein the one-dimensional carbon material 4 can play a role of enwinding and stabilizing the structure; in addition, the graphitized carbon material 7 can enhance the connection between the one-dimensional carbon materials 4, and the connectivity and uniformity between materials inside the particles.

FIG. 2 illustrated an SEM photograph of the silicon-carbon negative electrode material with pores in a gradient structure prepared in Example 1 of the present disclosure; as shown by FIG. 2, the silicon-carbon negative electrode material was provided with irregular internal pores 6, and the porosity was reduced from inside to outside; moreover, the outermost layer of the silicon-carbon negative electrode material had a dense carbon coating.

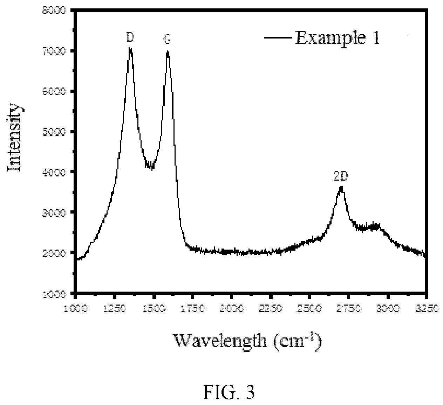

FIG. 3 illustrated a curve schematic diagram of the parameters I_{D}, I_{G} and I_{2D} of the silicon-carbon negative electrode material with pores in a gradient structure prepared in Example 1 of the present disclosure; as can be seen from FIG. 3, I_{D}: I_{G} = 1.01; I_{2D}/I_{G} = 0.51.

### Example 2

The example served to illustrate the silicon-carbon negative electrode material with pores in a gradient structure prepared in the present disclosure.
(1) 140g of silicon powder with a D₅₀ of 50nm, 20g of high-temperature asphalt, 40g of CNTs (CNTs with an aspect ratio of 500: 1), 20g of CTAB were sequentially dispersed in deionized water to obtain a slurry, and the solid content of the slurry was adjusted to 15 wt.%. The dispersed slurry was subjected to spray granulation to obtain a spray-granulated core; the spray-granulated core was subjected to a sintering procedure in an inert atmosphere, wherein the sintering procedure was as follows: heating from room temperature to 350 °C at a temperature rise rate of 5 °C/min and performing the heat preservation for 2 hours, then heating from 350 °C to 1,000 °C at a temperature rise rate of 2 °C /min and performing the heat preservation for 3 hours, and finally cooling to room temperature to obtain the sintered silicon-carbon composite core 1;
(2) the silicon-carbon composite core 1 was subsequently dispersed in tetrahydrofuran, 10% of high-temperature asphalt (with the softening point of 280°C) and 40g of metal catalyst salt iron nitrate were further added, the mixture was heated at 70°C after the iron nitrate and the high-temperature asphalt were completely dissolved, so that the tetrahydrofura was slowly evaporated; the dissolved asphalt was infiltrated into pores of the silicon-carbon composite material under a channel established by tetrahydrofuran, after the tetrahydrofuran was completely evaporated, a silicon-carbon composite containing asphalt on the shallow surface layer was obtained, the silicon-carbon composite was subjected to a sintering procedure in an inert atmosphere, wherein the sintering procedure was as follows: heating from room temperature to 500 °C at a temperature rise rate of 2 °C/min and performing heat preservation for 1 hour, then heating from 500 °C to 1,000 °C at a temperature rise rate of 1 °C /min and performing heat preservation for 3 hours, and finally cooling to room temperature to obtain a silicon-carbon composite core 2 with a high inner layer porosity and a low shallow surface layer porosity;
(3) the silicon-carbon composite core 2 and 10% high-temperature asphalt (with a softening point of 300°C) were subjected to a mechanical fusion by using a particle fusion machine, and then subjected to a high-temperature carbonization treatment in an inert atmosphere, wherein the sintering procedure was as follows: heating from room temperature to 500 °C at a temperature rise rate of 2 °C/min and performing heat preservation for 1 hour, then heating from 500 °C to 1,100 °C at a temperature rise rate of 1 °C /min and performing heat preservation for 3 hours, the temperature was reduced to the room temperature, the mixture was then sieved by a 400-mesh sieve, such that the silicon-carbon composite porous material with pores in a gradient structure having a dense carbon coating layer on the outside, a high inner layer porosity, and a low shallow surface layer porosity was prepared; the results were shown in Table 1.

The finished product silicon-carbon negative electrode material with pores in a gradient structure was coated with a film and assembled into the CR2032-button cell, wherein the silicon-carbon negative electrode material with pores in a gradient structure, a conductive agent, a binder, and deionized water are mixed according to the weight ratio of 90: 3: 7: 200 to form a slurry, which was subjected to coating, drying and cutting to obtain a pole piece; the lithium sheet and the conventional electrolyte were assembled into a button half-cell, and subjected to the charging and discharging test. The charging and discharging cycles were performed with the 1C multiplying power. The battery charging and discharging test was carried out in a multi-channel battery, and the test voltage range of the silicon-carbon negative electrode material was 0.005V-0.8V; the results were shown in Table 2.

### Example 3

The example served to illustrate the silicon-carbon negative electrode material with pores in a gradient structure prepared in the present disclosure.
(1) 160g of silicon powder with a D₅₀ of 30nm, 20g of high-temperature asphalt, 20g of cobalt nitrate, 20g of CNTs (CNTs with an aspect ratio of 300: 1), 20g of PVP were sequentially dispersed in deionized water to obtain a slurry, and the solid content of the slurry was adjusted to 10 wt.%. The dispersed slurry was subjected to spray granulation to obtain a spray-granulated core; the spray-granulated core was subjected to a sintering procedure in an inert atmosphere, wherein the sintering procedure was as follows: heating from room temperature to 350°C at a temperature rise rate of 5 °C/min and performing the heat preservation for 2 hours, then heating from 350 °C to 900°C at a temperature rise rate of 2°C/min and performing the heat preservation for 3 hours, and finally cooling to room temperature to obtain the sintered silicon-carbon composite core 1;
(2) the silicon-carbon composite core 1 was subsequently dispersed in toluene, 30% of high-temperature asphalt (with the softening point of 250°C) and 20g of cobalt nitrate were further added, the mixture was heated at 100 °C after the cobalt nitrate and the high-temperature asphalt were completely dissolved, so that the toluene was slowly evaporated; the dissolved asphalt was infiltrated into pores of the silicon-carbon composite material under a channel established by toluene, after the toluene was completely evaporated, a silicon-carbon composite containing asphalt on the shallow surface layer was obtained, the silicon-carbon composite was subjected to a sintering procedure in an inert atmosphere, wherein the sintering procedure was as follows: heating from room temperature to 500 °C at a temperature rise rate of 2 °C/min and performing heat preservation for 1 hour, then heating from 500 °C to 1,000 °C at a temperature rise rate of 1 °C /min and performing heat preservation for 3 hours, and finally cooling to room temperature to obtain a silicon-carbon composite core 2 with a high inner layer porosity and a low shallow surface layer porosity;
(3) the silicon-carbon composite core 2 and 10% high-temperature asphalt (with a softening point of 280°C) were subjected to a mechanical fusion by using a particle fusion machine, and then subjected to a high-temperature carbonization treatment in an inert atmosphere, wherein the sintering procedure was as follows: heating from room temperature to 500 °C at a temperature rise rate of 2 °C/min and performing heat preservation for 1 hour, then heating from 500 °C to 1,000 °C at a temperature rise rate of 1 °C /min and performing heat preservation for 3 hours, the temperature was reduced to the room temperature, the mixture was then sieved by a 400-mesh sieve, such that the silicon-carbon composite porous material with pores in a gradient structure having a dense carbon coating layer on the outside, a high inner layer porosity, and a low shallow surface layer porosity was prepared; the results were shown in Table 1.

The finished product silicon-carbon negative electrode material with pores in a gradient structure was coated with a film and assembled into the CR2032-button cell, wherein the silicon-carbon negative electrode material with pores in a gradient structure, a conductive agent, a binder, and deionized water are mixed according to the weight ratio of 90: 3: 7: 200 to form a slurry, which was subjected to coating, drying and cutting to obtain a pole piece; the lithium sheet and the conventional electrolyte were assembled into a button half-cell, and subjected to the charging and discharging test. The charging and discharging cycles were performed with the 1C multiplying power. The battery charging and discharging test was carried out in a multi-channel battery, and the test voltage range of the silicon-carbon negative electrode material was 0.005V-0.8V; the results were shown in Table 2.

### Example 4

The example served to illustrate the silicon-carbon negative electrode material with pores in a gradient structure prepared in the present disclosure.
(1) 140g of silicon powder with a D₅₀ of 80nm, 30g of high-temperature asphalt, 30g of magnesium chloride, 30g of VGCF (VGCF with an aspect ratio of 100: 1), 20g of SDS were sequentially dispersed in deionized water to obtain a slurry, and the solid content of the slurry was adjusted to 30 wt.%. The dispersed slurry was subjected to spray granulation to obtain a spray-granulated core; the spray-granulated core was subjected to a sintering procedure in an inert atmosphere, wherein the sintering procedure was as follows: heating from room temperature to 350°C at a temperature rise rate of 5 °C/min and performing the heat preservation for 2 hours, then heating from 350°C to 900°C at a temperature rise rate of 2°C/min and performing the heat preservation for 3 hours, and finally cooling to room temperature to obtain the sintered silicon-carbon composite core 1;
(2) the silicon-carbon composite core 1 was subsequently dispersed in toluene, 15% of high-temperature asphalt (with a softening point of 280°C) and 20g of nickel nitrate were further added, the mixture was heated at 100°C after the high-temperature asphalt were completely dissolved, so that the toluene was slowly evaporated; the dissolved asphalt was infiltrated into pores of the silicon-carbon composite material under a channel established by toluene, after the toluene was completely evaporated, a silicon-carbon composite containing asphalt on the shallow surface layer was obtained, the silicon-carbon composite was subjected to a sintering procedure in an inert atmosphere, wherein the sintering procedure was as follows: heating from room temperature to 500 °C at a temperature rise rate of 2 °C/min and performing heat preservation for 1 hour, then heating from 500 °C to 1,000°C at a temperature rise rate of 1 °C /min and performing heat preservation for 3 hours, and finally cooling to room temperature to obtain a silicon-carbon composite core 2 with a high inner layer porosity and a low shallow surface layer porosity;
(3) the silicon-carbon composite core 2 and 10% high-temperature asphalt (with the softening point of 300°C) were subjected to a mechanical fusion by using a particle fusion machine and then subjected to a high-temperature carbonization treatment in an inert atmosphere, wherein the sintering procedure was as follows: heating from room temperature to 500 °C at a temperature rise rate of 2 °C/min and performing heat preservation for 1 hour, then heating from 500 °C to 1,200 °C at a temperature rise rate of 1 °C /min and performing heat preservation for 3 hours, the temperature was reduced to the room temperature, the mixture was then sieved by a 400-mesh sieve, such that the silicon-carbon composite porous material with pores in a gradient structure having a dense carbon coating layer on the outside, a high inner layer porosity and a low shallow surface layer porosity was prepared; the results were shown in Table 1.

The finished product silicon-carbon negative electrode material with pores in a gradient structure was coated with a film and assembled into the CR2032-button cell, wherein the silicon-carbon negative electrode material with pores in a gradient structure, a conductive agent, a binder, and deionized water are mixed according to the weight ratio of 90: 3: 7: 200 to form a slurry, which was subjected to coating, drying and cutting to obtain a pole piece; the lithium sheet and the conventional electrolyte were assembled into a button half-cell, and subjected to the charging and discharging test. The charging and discharging cycles were performed with the 1C multiplying power. The battery charging and discharging test was carried out in a multi-channel battery, and the test voltage range of the silicon-carbon negative electrode material was 0.005V-0.8V; the results were shown in Table 2.

### Example 5

The example served to illustrate the silicon-carbon negative electrode material with pores in a gradient structure prepared in the present disclosure.

The silicon-carbon negative electrode material with pores in a gradient structure was prepared according to the same method as that in Example 1, except that the outermost layer is coated with a CVD coating, the temperature was 700°C, acetylene gas was used for coating at a gas flow rate of 1L/min for 1hour.

As a result, a silicon-carbon negative electrode material having pores in a gradient structure, a dense coating layer at the outside, and a high inner layer porosity and a low shallow surface layer porosity was prepared; the results were shown in Table 1.

A button half-cell was assembled according to the same method as that in Example 1, and subjected to the charging and discharging test; the results were shown in Table 2.

### Comparative Example 1

The spray granulation process was performed according to the same method as that in Example 1, except that the asphalt infiltration experiment was not performed, and the fusion coating of the granules was performed directly.

The performance parameters of the prepared silicon-carbon negative electrode material were as shown in Table 1.

The properties of the prepared lithium-ion battery were as shown in Table 2.

### Comparative Example 2

The silicon-carbon negative electrode material was prepared according to the same method as that in Example 1, except that the "CNTs" was replaced with "SP", wherein SP was carbon black.

The performance parameters of the prepared silicon-carbon negative electrode material were as shown in Table 1.

The properties of the prepared lithium-ion battery were as shown in Table 2.

### Comparative Example 3

The silicon-carbon negative electrode material was prepared according to the same method as that in Example 1, except that in step (1), the slurry was not subjected to spray granulation, but subjected to a mixing and evaporating process, in particular, the evenly mixed slurry was stirred and evaporated to dryness at the temperature of 90 °C. The sintering process was then performed, and the asphalt infiltration and mechanical fusion, and coating were further implemented. The performance parameters of the prepared silicon-carbon negative electrode material were as shown in Table 1.

The properties of the prepared lithium-ion battery were as shown in Table 2.

### Comparative Example 4

The silicon-carbon negative electrode material with pores in a gradient structure was prepared according to the same method as that in Example 1, except that in step (1), the metal catalyst salt nickel acetate was not added.

As a result, a silicon-carbon negative electrode material having pores in a gradient structure, a dense coating layer at the outside, and a high inner layer porosity and a low shallow surface layer porosity was prepared; the results were shown in Table 1.

The finished product silicon-carbon negative electrode material with pores in a gradient structure was coated with a film and assembled into a CR2032-button cell according to the same method as that in Example 1, the results were as shown in Table 2.

### Comparative Example 5

The silicon-carbon negative electrode material with pores in a gradient structure was prepared according to the same method as that in Example 1, except that the metal catalyst salt nickel acetate was not added, and the "high-temperature asphalt" was replaced with the "graphite with a D₅₀ of 5µm.

The performance parameters of the prepared silicon-carbon negative electrode material were as shown in Table 1.

The properties of the prepared lithium-ion battery were as shown in Table 2.

**Table 1**

| Items | Example 1 | Example 2 | Example 3 | Example 4 | Example 5 |
|---|---|---|---|---|---|
| Graphitization degree of the whole particles (%) | 57.5 | 67.3 | 62.6 | 58.4 | 66.9 |
| The thickness of shallow surface layer 2 (µm) | 3.4 | 5.6 | 4.0 | 4.5 | 3.5 |
| Thickness of coating layer (carbon coating layer 3) (µm) | 0.2 | 0.5 | 0.3 | 0.5 | 0.2 |
| The particle size of inner layer 1 (µm) | 5.3 | 2.0 | 4.7 | 3.9 | 5.3 |
| D₅₀ of silicon-carbon negative electrode material (µm) | 8.9 | 8.1 | 9.0 | 8.9 | 9.0 |
| Tap density (g/cm³) | 0.84 | 0.91 | 0.89 | 0.90 | 0.90 |
| Specific surface area (m²/g) | 5.3 | 3.0 | 4.5 | 3.2 | 0.4 |
| Hardness (MPa) | 781 | 832 | 910 | 799 | 882 |
| The porosity of inner layer | 43.2 | 48.3 | 45.7 | 41.5 | 43.2 |
| (%) | | | | | |
| The porosity of shallow surface layer (%) | 12.3 | 13.2 | 13.5 | 13.9 | 11.9 |
| The porosity of carbon coating layer (%) | 3.5 | 1.7 | 2.8 | 5.8 | 3.1 |
| Pore size distribution of inner pores of the inner layer (nm) | 40-1000 | 30-350 | 35-450 | 45-600 | 40-1000 |
| Pore size distribution of internal pores of the shallow surface layer (nm) | 7-9 | 5-7 | 6-8 | 7-10 | 7-8 |
| Pore size distribution of internal pores of the carbon coating layer (nm) | 3-4 | 0.2-2 | 1-3 | 3-5 | 2-3 |
| I_{D}: I_{G} | 1.01 | 0.87 | 0.95 | 0.96 | 0.88 |
| I_{2D}/I_{G} | 0.51 | 0.66 | 0.63 | 0.64 | 0.65 |
| The conductivity of graphitized porous silicon-carbon negative electrode material (S/m) | 2.1×10² | 4.3×10² | 3.5×10² | 3.3×10² | 4.1×10² |
| Carbon content (%) | 50.52 | 50.72 | 51.03 | 51.29 | 50.31 |

**Table 1 (continued)**

| Items | Comparativ e Example 1 | Comparativ e Example 2 | Comparativ e Example 3 | Comparativ e Example 4 | Comparativ e Example 5 |
|---|---|---|---|---|---|
| Graphitizatio n degree of the whole particles (%) | 43.1 | 27.6 | 44.5 | 9.6 | 56.7 |
| The thickness of shallow surface layer 2 (µm) | 0 | 4.5 | 4.2 | 3 | 3.8 |
| The thickness of coating layer (carbon coating layer 3) (µm) | 0.2 | 0.2 | 0.2 | 0.1 | 0.3 |
| The particle size of inner layer 1 (µm) | 8.5 | 4.9 | 5.0 | 5.2 | 5.2 |
| D₅₀ of silicon-carbon negative electrode material (µm) | 8.7 | 9.6 | 9.4 | 8.2 | 9.3 |
| Tap density (g/cm³) | 0.7 | 0.6 | 0.6 | 0.82 | 0.81 |
| Specific surface area (m²/g) | 11.6 | 17.1 | 15.3 | 6.3 | 5.7 |
| Hardness (MPa) | 322 | 253 | 450 | 674 | 533 |
| The porosity of inner layer (%) | 68.0 | 71.2 | 12.7 | 42.2 | 55.2 |
| The porosity of shallow surface layer (%) | 0 | 35.5 | 5.5 | 14.3 | 15.1 |
| The porosity of carbon coating layer (%) | 5.1 | 13.7 | 8.6 | 3.7 | 2.9 |
| Pore size distribution of inner pores of the inner layer (nm) | 10-1000 | 50-2000 | 30-1500 | 40-1000 | 50-1000 |
| Pore size distribution of internal pores of the shallow surface layer (nm) | 0 | 30-50 | 40-60 | 7-9 | 6-9 |
| Pore size distribution of internal pores of the carbon coating layer (nm) | 3-5 | 1-10 | 2-15 | 3-4 | 2-3 |
| I_{D}: I_{G} | 1.61 | 1.58 | 1.63 | 1.70 | 1.1 |
| I_{2D}/I_{G} | 0.2 | 0.25 | 0.24 | 0.25 | 0.53 |
| The conductivity of graphitized porous silicon-carbon negative electrode material (S/m) | 1.1×10¹ | 1.3×10¹ | 1.5×10¹ | 1.6×10² | 1.3×10² |
| Carbon content (%) | 64.88 | 69.15 | 72.97 | 50.84 | 55.23 |

| | | | | | |
|---|---|---|---|---|---|
| Note: "carbon content (%)" in Table 1 refers to that the prepared graphitized porous silicon-carbon negative electrode material contains silicon, a one-dimensional carbon material, an amorphous carbon and a graphitized carbon, and the percentage of the total content of the one-dimensional carbon material, the amorphous carbon and the graphitized carbon, based on the total weight of the graphitized porous silicon-carbon negative electrode material. | | | | | |

As can be seen from the results in Table 1, the stable inner layer and shallow surface layer are formed by using the silicon-carbon negative electrode materials prepared in Examples 1-5 of the present disclosure, in combination with the dense carbon coating layer, the specific surface area can be reduced and the tap density can be increased; in addition, the porosity is gradiently decreased from inside to outside; and as can be seen, the carbon source may be catalyzed to a high graphitization degree by adding a metal catalyst salt.

**Table 2**

| | Specific charging capacity (mAh/g) | Specific discharging capacity (mAh/g) | First coulombic efficiency (%) | Capacity retention rate after 100 cycles (%) |
|---|---|---|---|---|
| Example 1 | 1583.4 | 1780.0 | 88.9 | 85 |
| Example 2 | 1577.1 | 1750.4 | 90.1 | 90 |
| Example 3 | 1567.2 | 1795.2 | 87.3 | 84 |
| Example 4 | 1558.8 | 1743.6 | 89.4 | 86 |
| Example 5 | 1590.2 | 1774.8 | 89.6 | 90 |
| Comparative Example 1 | 1123.9 | 1784.0 | 63.0 | 43 |
| Comparative Example 2 | 987.3 | 1741.3 | 56.7 | 45 |
| Comparative Example 3 | 864.9 | 1805.6 | 47.9 | 38 |
| Comparative Example 4 | 1573.2 | 1773.6 | 88.7 | 82 |
| Comparative Example 5 | 1432.7 | 2500.3 | 57.3 | 45 |

As can be seen from the results in Table 2, the silicon-carbon negative electrode materials prepared in Examples 1-5 of the present disclosure can improve the first coulombic efficiency of lithium-ion batteries and can increase the capacity retention rate after 100 cycles.

The above content describes in detail the preferred embodiments of the present disclosure, but the present disclosure is not limited thereto. A variety of simple modifications can be made in regard to the technical solutions of the present disclosure within the scope of the technical concept of the present disclosure, including a combination of individual technical features in any other suitable manner, such simple modifications and combinations thereof shall also be regarded as the content disclosed by the present disclosure, each of them falls into the protection scope of the present disclosure.

## Claims

1. A graphitized porous silicon-carbon anode material comprising a core and a carbon coating layer coated on an outer surface of the core, wherein the core sequentially comprises an inner layer and a shallow surface layer from inside to outside, the graphitized porous silicon-carbon anode material is internally provided with pores in gradient distribution, and the porosity is gradually decreased from inside to outside along the inner layer, the shallow surface layer and the carbon coating layer, the inner layer has a porosity within the range from 30% to 60%, the shallow surface layer has a porosity within the range from 10% to 30%, the carbon coating layer has a porosity within the range from 1% to 10%; and the core comprises a silicon-carbon composite comprising nano-silicon particles, a conductive agent and a graphitized carbon material, the conductive agent is a one-dimensional carbon material, the one-dimensional carbon material is conductive carbon material, the conductive carbon material comprises at least one selected from the group consisting of single-walled CNTs, multi-walled CNTs, and VGCF; wherein the porosity is obtained by computerized tomography (CT) scanning technique.

2. The graphitized porous silicon-carbon anode material of claim 1, wherein the nano-silicon particles have a D₅₀ within the range from 30 nm to 500 nm;
and/or, the conductive agent comprises a metallic material and/or a non-metallic material; preferably, the one-dimensional carbon material has an aspect ratio of (20-20,000): 1.

3. The graphitized porous silicon-carbon anode material of claim 2, wherein the whole particle of the graphitized porous silicon-carbon anode material contains silicon, a one-dimensional carbon material, amorphous carbon, and graphitized carbon; the content of the silicon is within the range from 40 wt.% to 80 wt.%, and the total content of the one-dimensional carbon material, the amorphous carbon and the graphitized carbon is within the range from 20 wt.% to 60 wt.%, based on the total weight of the whole particle of the graphitized porous silicon-carbon anode material.

4. The graphitized porous silicon-carbon anode material of any one of claims 1-3, wherein the pore size distribution of the internal pores of the inner layer is within the range from 10nm to 1,000 nm, the pore size distribution of the internal pores of the shallow surface layer is within the range from 5 nm to 30 nm, and the pore size distribution of the internal pores of the carbon coating layer is greater than 0 and less than or equal to 10 nm, preferably within the range from 0.01 nm to 10 nm, and more preferably within the range from 1 nm to 10 nm.

5. The graphitized porous silicon-carbon anode material of claim 1, wherein the silicon-carbon anode material has a D₅₀ within the range from 5 µm to 30 µm; and a specific surface area within the range from 0.4 m²/g to 20 m²/g;
and/or, the particle size of the inner layer is from 2% to 90%, based on the D₅₀ of the silicon-carbon anode material;
and/or, the thickness of the shallow surface layer is within the range from 0.25 µm to 12 µm; the thickness of the carbon coating layer is within the range from 10 nm to 1 µm;
and/or, the coating amount of the carbon coating layer is from 1 wt.% to 20 wt.% of the graphitized porous silicon-carbon anode material.

6. A method for preparing the graphitized porous silicon-carbon anode material of any one of claims 1-5 comprising:
(1) contacting nano-silicon particles, a carbon source, a dispersant, and a conductive agent with water to prepare a slurry; subjecting the slurry to a spray granulation and a first calcination treatment to obtain a silicon-carbon composite core 1;
(2) subjecting a mixture consisting of the silicon-carbon composite core 1, a solvent and a high-temperature asphalt 1 to a heating treatment, and subjecting the obtained silicon-carbon composite containing asphalt on the shallow surface layer to a second calcination treatment, to obtain a silicon-carbon composite core 2 having a high inner layer porosity and a low shallow surface layer porosity;
wherein a metal catalyst salt is added in the process of preparing the slurry and/or performing the heating treatment in step (1) and/or step (2);
(3) subjecting the silicon-carbon composite core 2 and the high-temperature asphalt 2 to a mechanical fusion or a CVD coating, and performing a high-temperature carbonization treatment, in order to prepare the silicon-carbon anode material having a dense carbon coating layer on the outer part, a high inner layer porosity, and a low shallow surface layer porosity.

7. The method of claim 6, wherein the conditions of the first calcination treatment, the second calcination treatment, and the high-temperature carbonization treatment are the same or different, and the respective sintering procedure includes:
a temperature rise rate within the range from 1°C/min to 5°C/min, a final heating temperature within the range from 600°C to 1, 200°C, and a heat preservation time within the range from 1hour to 6 hours;
preferably, the sintering is performed under an inert atmosphere;
preferably, the inert atmosphere comprises nitrogen gas or argon gas.

8. The method of claim 6, wherein the metal catalyst salt comprises one or more selected from the group consisting of iron salt, cobalt salt, nickel salt, and magnesium salt;
preferably, the metal catalyst salt comprises one or more selected from the group consisting of nickel acetate, nickel nitrate, nickel sulfate, ferric nitrate, ferric chloride, ferric sulfate, magnesium nitrate, magnesium chloride, magnesium sulfate, cobalt nitrate, and cobalt chloride; and/or the weight ratio of the used amounts of the nano-silicon particles, the carbon source, the conductive agent, the metal catalyst salt, and the dispersant is (40-80): (5-50): (5-40): (5-60): (5-20);
and/or, the carbon source is one or more selected from the group consisting of low-temperature asphalt, medium-temperature asphalt, high-temperature asphalt, water-soluble asphalt, phenolic resin, CMC, glucose, and sucrose;
and/or, the dispersant comprises one or more selected from the group consisting of PVP, CTAB, polyethylene glycol, and SDS.

9. The method of claim 6, wherein the slurry in step (1) has a solid content within the range from 1 wt.% to 40 wt.%;
and/or, the conditions of the heating treatment in step (2) include: a temperature within the range from 600°C to 1, 200°C;
and/or, the coating in step (3) is performed by using at least one of a particle fusion machine, a VCJ machine, and a CVD.

10. The method of claim 6, wherein the solvent comprises one or more selected from the group consisting of tetrahydrofuran, NMP, toluene, and xylene;
and/or, the used amount of the high-temperature asphalt 1 in step (2) is from 5 wt.%-30 wt.%, based on the total weight of the silicon-carbon composite core 1;
and/or, the used amount of the high-temperature asphalt 2 in step (3) is from 1 wt.% to 20 wt.%,
based on the total weight of the silicon-carbon composite core 2.

11. A lithium ion battery comprising the graphitized porous silicon-carbon anode material provided with pores in gradient distribution of any one of claims 1-5.

## Patentansprüche

1. Graphitiertes poröses Silizium-Kohlenstoff-Anodenmaterial, das einen Kern und eine Kohlenstoff-Beschichtungsschicht umfasst, die auf einer äußeren Oberfläche des Kerns beschichtet ist, wobei der Kern von innen nach außen aufeinanderfolgend eine innere Schicht und eine flache Oberflächenschicht umfasst, das graphitierte poröse Silizium-Kohlenstoff-Anodenmaterial innen mit Poren in gradueller Verteilung versehen ist, und die Porosität graduell von innen nach außen entlang der inneren Schicht, der flachen Oberflächenschicht und der Kohlenstoff-Beschichtungsschicht vermindert ist, die innere Schicht eine Porosität innerhalb des Bereichs von 30% bis 60% aufweist, die flache Oberflächenschicht eine Porosität innerhalb des Bereichs von 10% bis 30% aufweist, die Kohlenstoff-Beschichtungsschicht eine Porosität innerhalb des Bereichs von 1% bis 10% aufweist; und der Kern einen Silizium-Kohlenstoff-Verbund umfasst, der Nanosiliziumpartikel, ein leitfähiges Mittel und graphitiertes Kohlenstoffmaterial umfasst, das leitfähige Mittel ein eindimensionales Kohlenstoffmaterial ist, das eindimensionale Kohlenstoffmaterial leitfähiges Kohlenstoffmaterial ist, das leitfähige Kohlenstoffmaterial mindestens eines umfasst, das ausgewählt ist aus der Gruppe, die besteht aus einwandigen CNTs, mehrwandigen CNTs und VGCF; wobei die Porosität mittels Computertomographie-Scan-Technik (CT) erhalten wird.

2. Graphitiertes poröses Silizium-Kohlenstoff-Anodenmaterial nach Anspruch 1, wobei die Nanosiliziumpartikel einen D₅₀ innerhalb des Bereichs von 30 nm bis 500 nm aufweisen;
und/oder das leitfähige Mittel ein metallisches Material und/oder ein nichtmetallisches Material umfasst;
wobei das eindimensionale Kohlenstoffmaterial vorzugsweise ein Seitenverhältnis von (20 bis 20 000):1 aufweist.

3. Graphitiertes poröses Silizium-Kohlenstoff-Anodenmaterial nach Anspruch 2, wobei das ganze Partikel des graphitierten porösen Silizium-Kohlenstoff-Anodenmaterials Silizium, ein eindimensionales Kohlenstoffmaterial, amorphen Kohlenstoff und graphitierten Kohlenstoff enthält; der Gehalt des Siliziums innerhalb des Bereichs von 40 Gew.-% bis 80 Gew.-% liegt und der Gesamtgehalt des eindimensionalen Kohlenstoffmaterials, des amorphen Kohlenstoffs und des graphitierten Kohlenstoffs innerhalb des Bereichs von 20 Gew.-% bis 60 Gew.-% liegt, bezogen auf das Gesamtgewicht des ganzen Partikels des graphitierten porösen Silizium-Kohlenstoff-Anodenmaterials.

4. Graphitiertes poröses Silizium-Kohlenstoff-Anodenmaterial nach einem der Ansprüche 1 bis 3, wobei die Porengrößenverteilung der inneren Poren der inneren Schicht innerhalb des Bereichs von 10 nm bis 1000 nm liegt, die Porengrößenverteilung der inneren Poren der flachen Oberflächenschicht innerhalb des Bereichs von 5 nm bis 30 nm liegt und die Porengrößenverteilung der inneren Poren der Kohlenstoff-Beschichtungsschicht größer als 0 und kleiner oder gleich 10 nm ist, vorzugsweise innerhalb des Bereichs von 0,01 nm bis 10 nm und bevorzugter innerhalb des Bereichs von 1 nm bis 10 nm liegt.

5. Graphitiertes poröses Silizium-Kohlenstoff-Anodenmaterial nach Anspruch 1, wobei das Silizium-Kohlenstoff-Anodenmaterial einen D₅₀ innerhalb des Bereichs von 5 µm bis 30 µm; und eine spezifische Oberfläche innerhalb des Bereichs von 0,4 m²/g bis 20 m²/g aufweist;
und/oder die Partikelgröße der inneren Schicht, bezogen auf den D₅₀ des Silizium-Kohlenstoff-Anodenmaterials, von 2% bis 90% beträgt;
und/oder die Dicke der flachen Oberflächenschicht innerhalb des Bereichs von 0,25 µm bis 12 µm liegt;
die Dicke der Kohlenstoff-Beschichtungsschicht innerhalb des Bereichs von 10 nm bis 1 µm liegt;
und/oder die Beschichtungsmenge der Kohlenstoff-Beschichtungsschicht von 1 Gew.-% bis 20 Gew.-% des graphitierten porösen Silizium-Kohlenstoff-Anodenmaterials beträgt.

6. Verfahren zur Herstellung des graphitierten porösen Silizium-Kohlenstoffmaterials nach einem der Ansprüche 1 bis 5, umfassend:
(1) Kontaktieren von Nanosiliziumpartikeln, einer Kohlenstoffquelle, einem Dispergiermittel und einem leitfähigen Mittel mit Wasser, um eine wässrige Mischung herzustellen; Unterziehen der wässrigen Mischung einer Sprühgranulierung und einer ersten Kalzinierungsbehandlung, um einen Silizium-Kohlenstoff-Verbundkern 1 zu erhalten;
(2) Unterziehen eines Gemischs, das aus dem Silizium-Kohlenstoff-Verbundkern 1, einem Lösungsmittel und einem Hochtemperaturasphalt 1 besteht, einer Wärmebehandlung und Unterziehen des erhaltenen Silizium-Kohlenstoff-Verbundhaltigen Asphalts auf der flachen Oberflächenschicht einer zweiten Kalzinierungsbehandlung, um einen Silizium-Kohlenstoff-Verbundkern 2 zu erhalten, der eine hohe Porosität der inneren Schicht und eine niedrige Porosität der flachen Oberflächenschicht aufweist;
wobei ein Metallkatalysatorsalz in dem Prozess des Herstellens der wässrigen Mischung und/oder des Durchführens der Erwärmungsbehandlung im Schritt (1) und/oder Schritt (2) beigegeben wird;
(3) Unterziehen des Silizium-Kohlenstoff-Verbundkerns 2 und des Hochtemperaturasphalts 2 einer mechanischen Vereinigung oder einer CVD-Beschichtung und Durchführen einer Hochtemperatur-Karbonisierungsbehandlung, um das Silizium-Kohlenstoff-Anodenmaterial herzustellen, das eine dichte Kohlenstoff-Beschichtungsschicht auf dem äußeren Teil, eine hohe Porosität der inneren Schicht und eine niedrige Porosität der flachen Oberflächenschicht aufweist.

7. Verfahren nach Anspruch 6, wobei die Bedingungen der ersten Kalzinierungsbehandlung, der zweiten Kalzinierungsbehandlung und der Hochtemperatur-Karbonisierungsbehandlung die gleichen oder unterschiedlich sind und die entsprechende Sinterungsprozedur umfasst:
eine Temperaturanstiegsrate innerhalb des Bereichs von 1°C/min bis 5°C/min, eine endgültige Erwärmungstemperatur innerhalb des Bereichs von 600°C bis 1200°C und eine Wärmehaltezeit innerhalb des Bereichs von 1 Stunde bis 6 Stunden;
wobei das Sintern vorzugsweise unter einer inerten Atmosphäre durchgeführt wird;
wobei die inerte Atmosphäre vorzugsweise Stickstoffgas oder Argongas umfasst.

8. Verfahren nach Anspruch 6, wobei das Metallkatalysatorsalz eines oder mehrere umfasst, die ausgewählt sind aus der Gruppe, die besteht aus Eisensalz, Kobaltsalz, Nickelsalz und Magnesiumsalz;
wobei das Metallkatalysatorsalz vorzugsweise eines oder mehrere umfasst, das bzw. die ausgewählt ist bzw. sind aus der Gruppe, die besteht aus Nickelacetat, Nickelnitrat, Nickelsulfat, Eisennitrat, Eisenchlorid, Eisensulfat, Magnesiumnitrat, Magnesiumchlorid, Magnesiumsulfat, Kobaltnitrat und Kobaltchlorid; und/oder das Gewichtsverhältnis der verwendeten Mengen der Nanosiliziumpartikel, der Kohlenstoffquelle, des leitfähigen Mittels, des Metallkatalysatorsalzes und des Dispergiermittels (40 bis 80): (5 bis 50): (5 bis 40): (5 bis 60): (5 bis 20) beträgt;
und/oder die Kohlenstoffquelle eine oder mehrere ist, die ausgewählt ist bzw. sind aus der Gruppe, die besteht aus Niedertemperaturasphalt, Mitteltemperaturasphalt, Hochtemperaturasphalt, wasserlöslichem Asphalt, Phenolharz, CMC, Glucose und Saccharose;
und/oder das Dispergiermittel eines oder mehrere umfasst, das bzw. die ausgewählt sind aus der Gruppe, die besteht aus PVP, CTAB, Polyethylenglycol und SDS.

9. Verfahren nach Anspruch 6, wobei die wässrige Mischung in Schritt (1) einen Feststoffgehalt innerhalb des Bereichs von 1 Gew.-% bis 40 Gew.-% aufweist;
und/oder die Bedingungen der Erwärmungsbehandlung in Schritt (2) umfassen: eine Temperatur innerhalb des Bereichs von 600°C bis 1200°C;
und/oder das Beschichten in Schritt (3) unter Verwendung mindestens einer Partikelverschmelzungsmaschine, einer VCJ-Maschine und einer CVD durchgeführt wird.

10. Verfahren nach Anspruch 6, wobei das Lösungsmittel eines oder mehrere umfasst, die ausgewählt sind aus der Gruppe, die besteht aus Tetrahydrofuran, NMP, Toluol und Xylol;
und/oder die verwendete Menge des Hochtemperaturasphalts 1 in Schritt (2), bezogen auf das Gesamtgewicht des Silizium-Kohlenstoff-Verbundkerns 1, von 5 Gew.-% bis 30 Gew.-% beträgt;
und/oder die verwendete Menge des Hochtemperaturasphalts 2 in Schritt (3), bezogen auf das Gesamtgewicht des Silizium-Kohlenstoff-Verbundkerns 2, von 1 Gew.-% bis 20 Gew.-% beträgt.

11. Lithium-Ionen-Batterie, welche das mit Poren in einer graduellen Verteilung versehene graphitierte poröse Silizium-Kohlenstoff-Anodenmaterial nach einem der Ansprüche 1 bis 5 umfasst.

## Revendications

1. Matériau d'anode en silicium-carbone poreux graphitisé comprenant un noyau et une couche de revêtement en carbone revêtant une surface extérieure du noyau, dans lequel le noyau comprend dans l'ordre, de l'intérieur vers l'extérieur, une couche intérieure et une couche de surface peu profonde, le matériau d'anode en silicium-carbone graphitisé est doté en interne de pores selon une distribution en gradient, et la porosité diminue progressivement de l'intérieur vers l'extérieur le long de la couche intérieure, de la couche de surface peu profonde et de la couche de revêtement en carbone, la couche intérieure a une porosité située dans la plage allant de 30 % à 60 %, la couche de surface peu profonde a une porosité située dans la plage allant de 10 % à 30 %, la couche de revêtement en carbone a une porosité située dans la plage allant de 1 % à 10 % ; et le noyau comprend un composite de silicium-carbone comprenant des nanoparticules de silicium, un agent conducteur et un matériau en carbone graphitisé, l'agent conducteur est un matériau en carbone monodimensionnel, le matériau en carbone monodimensionnel est un matériau en carbone conducteur, le matériau en carbone conducteur comprend au moins l'un choisi dans le groupe constitué par les CNT monoparois, les CNT multiparois, et les VGCF ; dans lequel la porosité est obtenue au moyen d'une technique de balayage par tomodensitométrie (CT).

2. Matériau d'anode en silicium-carbone poreux graphitisé selon la revendication 1, dans lequel les nanoparticules de silicium ont une D₅₀ située dans la plage allant de 30 nm à 500 nm ;
et/ou l'agent conducteur comprend un matériau métallique et/ou un matériau non métallique ;
de préférence le matériau carboné monodimensionnel a un rapport d'aspect de (20 à 20 000)/1.

3. Matériau d'anode en silicium-carbone poreux graphitisé selon la revendication 2, dans lequel la particule entière du matériau d'anode en silicium-carbone poreux graphitisé contient du silicium, un matériau en carbone monodimensionnel, du carbone amorphe, et du carbone graphitisé ; la teneur en silicium est située dans la plage allant de 40 % en poids à 80 % en poids, et la teneur totale en le matériau carboné monodimensionnel, le carbone amorphe et le carbone graphitisé est située dans la plage allant de 20 % en poids à 60 % en poids, par rapport au poids total de la particule entière du matériau d'anode en silicium-carbone poreux graphitisé.

4. Matériau d'anode en silicium-carbone poreux graphitisé selon l'une quelconque des revendications 1 à 3, dans lequel la distribution des tailles des pores internes de la couche intérieure est située dans la plage allant de 10 nm à 1 000 nm, la distribution des tailles des pores internes de la couche de surface peu profonde est située dans la plage allant de 5 nm à 30 nm, et la distribution des tailles des pores internes de la couche de revêtement en carbone est supérieure à 0 et inférieure ou égale à 10 nm, de préférence située dans la plage allant de 0,01 nm à 10 nm, et mieux encore située dans la plage allant de 1 nm à 10 nm.

5. Matériau d'anode en silicium-carbone poreux graphitisé selon la revendication 1, dans lequel le matériau d'anode en silicium-carbone a une D₅₀ située dans la plage allant de 5 µm à 30 µm ; et une surface spécifique située dans la plage allant de 0,4 m²/g à 20 m²/g ;
et/ou la taille des particules de la couche intérieure, basée sur la D₅₀ du matériau d'anode en silicium-carbone, est de 2 % à 90 % ;
et/ou l'épaisseur de la couche de surface peu profonde est située dans la plage allant de 0,25 µm à 12 µm ; l'épaisseur de la couche de revêtement en carbone est située dans la plage allant de 10 nm à 1 µm ;
et/ou la quantité de revêtement de la couche de revêtement en carbone est de 1 % en poids à 20 % en poids du matériau d'anode en silicium-carbone poreux graphitisé.

6. Procédé pour préparer le matériau d'anode en silicium-carbone poreux graphitisé de l'une quelconque des revendications 1 à 5, comprenant :
(1) la mise en contact de nanoparticules de silicium, d'une source de carbone, d'un dispersant, et d'un agent conducteur avec de l'eau pour préparer une bouillie ; la soumission de la bouillie à une granulation par pulvérisation et à un premier traitement de calcination pour que soit obtenu un noyau composite de silicium-carbone 1 ;
(2) la soumission d'un mélange consistant en le noyau composite de silicium-carbone 1, un solvant, et un asphalte haute température 1, à un traitement de chauffage, et la soumission du composite de silicium-carbone obtenu contenant de l'asphalte sur la couche de surface peu profonde à un deuxième traitement de calcination, pour que soit obtenu un noyau composite de silicium-carbone 2 ayant une porosité de couche intérieure élevée et une porosité de couche de surface peu profonde faible ;
dans lequel un sel métallique catalyseur est ajouté dans le procédé de préparation de la bouillie et/ou de mise en œuvre du traitement de chauffage dans l'étape (1) et/ou l'étape (2) ;
(3) la soumission du noyau composite de silicium-carbone 2 et de l'asphalte haute température 2 à une fusion mécanique ou à un revêtement par CVD, et la mise en œuvre d'un traitement de carbonisation à température élevée afin de préparer le matériau d'anode en silicium-carbone ayant une couche de revêtement en carbone dense sur la partie extérieure, une porosité de couche intérieure élevée, et une porosité de couche de surface peu profonde faible.

7. Procédé selon la revendication 6, dans lequel les conditions du premier traitement de calcination, du deuxième traitement de calcination, et du traitement de carbonisation à température élevée, sont identiques ou différentes, et la procédure de frittage respective comprend :
une vitesse de montée en température située dans la plage allant de 1°C/min à 5°C/min, une température de chauffage finale située dans la plage allant de 600°C à 1 200°C, et un temps de maintien de la chaleur situé dans la plage allant de 1 heure à 6 heures ;
de préférence le frittage est effectué dans une atmosphère inerte ;
de préférence l'atmosphère inerte comprend de l'azote gazeux ou de l'argon gazeux.

8. Procédé selon la revendication 6, dans lequel le sel métallique catalyseur comprend un ou plusieurs choisis dans le groupe constitué par un sel de fer, un sel de cobalt, un sel de nickel, et un sel de magnésium ;
de préférence le sel métallique catalyseur comprend un ou plusieurs choisis dans le groupe constitué par l'acétate de nickel, le nitrate de nickel, le sulfate de nickel, le nitrate ferrique, le chlorure ferrique, le sulfate ferrique, le nitrate de magnésium, le chlorure de magnésium, le sulfate de magnésium, le nitrate de cobalt, et le chlorure de cobalt ;
et/ou le rapport en poids des quantités utilisées des nanoparticules de silicium, de la source de carbone, de l'agent conducteur, du sel métallique catalyseur, et du dispersant, est de (40 à 80) / (5 à 50) / (5 à 40) / (5 à 60) / (5 à 20) ;
et/ou la source de carbone est un ou plusieurs choisis dans le groupe constitué par un asphalte basse température, un asphalte moyenne température, un asphalte haute température, un asphalte soluble dans l'eau, une résine phénolique, la CMC, le glucose, et le saccharose ;
et/ou le dispersant comprend un ou plusieurs choisis dans le groupe constitué par la PVP, le CTAB, le polyéthylèneglycol, et le SDS.

9. Procédé selon la revendication 6, dans lequel la bouillie dans l'étape (1) a une teneur en solides située dans la plage allant de 1 % en poids à 40 % en poids ;
et/ou les conditions du traitement de chauffage dans l'étape (2) comprennent : une température située dans la plage allant de 600°C à 1 200°C ;
et/ou le revêtement dans l'étape (3) est effectué par utilisation d'au moins l'un parmi une machine de fusion de particules, une machine VCJ, et un CVD.

10. Procédé selon la revendication 6, dans lequel le solvant comprend un ou plusieurs choisis dans le groupe constitué par le tétrahydrofurane, la NMP, le toluène et le xylène ;
et/ou la quantité utilisée de l'asphalte haute température 1 dans l'étape (2) est de 5 % en poids à 30 % en poids, par rapport au poids total du noyau composite en silicium-carbone 1 ;
et/ou la quantité utilisée de l'asphalte haute température 2 dans l'étape (3) est de 1 % en poids à 20 % en poids, par rapport au poids total du noyau composite en silicium-carbone 2.

11. Batterie au lithium ion comprenant le matériau d'anode en silicium-carbone poreux graphitisé doté de pores selon une distribution en gradient de l'une quelconque des revendications 1 à 5.
